# EUROPEAN PATENT APPLICATION

(11) **EP 4 246 459 A1**
(43) Date of publication of application: **20.09.2023**
(21) Application number: 22305318.2
(22) Date of filing: 18.03.2022
(51) Int. Cl.: G06V 10/774, G06V 10/82, G06V 40/16

(54) **GENERATING TRAINING AND/OR TESTING DATA OF A FACE RECOGNITION SYSTEM FOR IMPROVED RELIABILITY**

(71) Applicant: Amadeus S.A.S., 06410 Biot (FR)
(72) Inventor: CAO, Hongliu, 06300 Nice (FR); RAVANEL, Alexis, 06600 Antibes (FR)
(74) Representative: Samson & Partner Patentanwälte mbB

(57) **Abstract**

A computerized method of generating training and/or testing data for a face recognition machine learning network applied by a face recognition system is presented. The method comprises defining a semantic parameter space, wherein the semantic parameter space comprises a vector of semantic parameters associated with a facial image. The method further comprises training a mapping machine learning network to transform the vector of semantic parameters to a vector of style space parameters of a style-based generative adversarial network. When the mapping machine learning network is trained, the method further comprises generating a variation vector of style space parameters for an input facial image by applying the trained mapping machine learning network and feeding the style-based generative adversarial network with the variation vector of style space parameters to generate a variation facial image for the input facial image. Finally, the method comprises storing the variation facial image in a database and training and/or testing the face recognition machine learning network at the face recognition system by using a plurality of variation facial images stored in the database. A corresponding face recognition system and a computer program are provided, too.

## Description

### FIELD OF THE INVENTION

The present invention generally relates to improvements in face recognition, in particular, to a computerized method and a computer program for generating training and/or testing data for a face recognition machine learning network applied by a face recognition system and to a face recognition system trained and/or tested with the generated data.

### BACKGROUND OF THE INVENTION

Face recognition is a technology capable of identifying a person through an image, video, or any other visual representation. This identification is then used for different purposes, such as accessing an area, unlock a mobile phone, verifying a document or the like. The face recognition is usually required to be carried out in real-time, which was a crucial point in the past. By using artificial intelligence (AI) and machine learning technologies, modern facial recognition systems can now operate in real-time. Various machine learning algorithms for face recognition are applied in different face recognition system that can identify people more or less well. However, all these face recognition algorithms have one common denominator: they are only as good as their training data.

A reliable face recognition system must ensure a good performance, i.e., having a high probability of identifying a person of whom only one or a few pictures are available in an internal database. However, people change their appearance from time to time, e.g. their hairstyle, their skin tone (for example after sunbathing), their accessories (glasses, hat, face mask etc.) or are further away from the camera, look into the camera at a different angle, smile or cry and so on. In order to reliably assign such changes to a person, machine learning face recognition systems usually need to be provided with as complete a dataset of faces as possible, with variations on identity, ethnicity, skin color, hairstyle, pose, and more, for training and testing.

Existing facial datasets are however not representative enough. This is for example due to the difficulty of collecting real data, restrictive licenses on already collected images, underrepresentation of some population groups, overrepresentation of photos with certain poses/distances from the camera, and the like. Generating fake images for training is therefore a convincing solution.

Generative adversarial networks have been proven to generate new photographs that look (at least superficially) authentic to human observers and that have many realistic characteristics. A generative adversarial network (GAN) is a generative model which is used to generate fake things such as images, audio and videos. GANs contain two neural networks the Generator and the Discriminator. These two neural networks play a game of cat and mouse, one attempting to generate artificial images indistinguishable from real photographs, the other attempting to tell the difference. Hence, one neural network trains the other.

There already exist a lot of high quality GANs for generation of facial images. However, the GANs are usually not controllable as to generate such image variations that are required for training and/or testing a reliable face recognition system. Therefore, there is a need to enable a controllable generation of facial images with a GAN for training and/or testing face recognition systems.

### SUMMARY OF THE INVENTION

In this context, methods, systems and computer program products are presented as defined by the independent claims.

More specifically, a computerized method of generating training and/or testing data for a face recognition machine learning network applied by a face recognition system is presented. The method comprises defining a semantic parameter space, wherein the semantic parameter space comprises a vector of semantic parameters associated with a facial image, wherein the semantic parameters comprise face model parameters, situation parameters, and additional parameters, wherein each semantic parameter is associated with an attribute of the facial image. The method further comprises training a mapping machine learning network to transform the vector of semantic parameters to a vector of style space parameters of a style-based generative adversarial network, wherein the vector of style space parameters is structured in plurality of style layers with each style layer having a plurality of channels, wherein each channel controls an attribute of the facial image and each style layer is associated with a layer of the style-based generative adversarial network. When the mapping machine learning network is trained, the method further comprises generating a variation vector of style space parameters for an input facial image by applying the trained mapping machine learning network and feeding the style-based generative adversarial network with the variation vector of style space parameters to generate a variation facial image for the input facial image. Finally, the method comprises storing the variation facial image in a database and training and/or testing the face recognition machine learning network at the face recognition system by using a plurality of variation facial images stored in the database.

Furthermore, a face recognition system is presented that comprises a first computing system for training a face recognition machine learning network, wherein the first computing system is connected to a database storing training facial images, and a second computing system for inference computations of a face recognition machine learning network, wherein the face recognition machine learning network is trained with the facial images stored in the database and wherein the facial images are at least partially generated by the computerized method as described herein.

Moreover, a computer program is presented, the execution of which causes a computer to perform the method as described herein.

Further refinements are set forth by the dependent claims.

These and other objects, embodiments and advantages will become readily apparent to those skilled in the art from the following detailed description of the embodiments having reference to the attached figures, the invention not being limited to any particular embodiments.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
Figs. 1A and 1B shows face recognition systems with databases for training/testing images.
Fig. 2 shows an embodiment of the face recognition system.
Fig. 3 shows an embodiment of a use case for the face recognition system.
Fig. 4A gives an overview of a style-based generative adversarial network and Fig. 4B explains the structure of a style space of a style-based generative adversarial network.
Fig. 5 presents a flow chart of the basic method as described herein.
Fig. 6 depicts an example of 3D semantic parameter determination.
Fig. 7 presents a high-level overview on a mapping machine learning network.
Fig. 8 is a flowchart relating to a training of the mapping machine learning network.
Fig. 9 is a flowchart relating to a generation of a variation vector of style space parameters.
Fig. 10 is a flowchart of a further refinement when generating the variation vector of style space parameters.

### DETAILED DESCRIPTION

The present disclosure relates to face recognition systems that apply machine learning for identifying people, in particular, to an improvement of the reliability of such systems by providing structured and comprehensive set of training and/or testing images.

Face recognition is applied in many areas and becomes more and more important in people's lives. For example, nearly every newly manufactured smartphone is equipped with a face recognition algorithm that unlocks the phone if a registered user is in front of the camera. Another important application of face recognition systems concerns the security of public buildings such as airports, theaters, football stadiums, train stations and many more. For example, many airports, service providers, and/or airlines provide face recognitions systems for automatic check-in, baggage drop-off, boarding and the like. To ensure that unauthorized people cannot use a restricted service, e.g., use the mobile phone of another user, enter a plane or a train, check-in luggage, or cross a border, the face recognition systems used therein are required to have a high reliability, i.e., to provide fewer to no false-positives and fewer to no false-negatives.

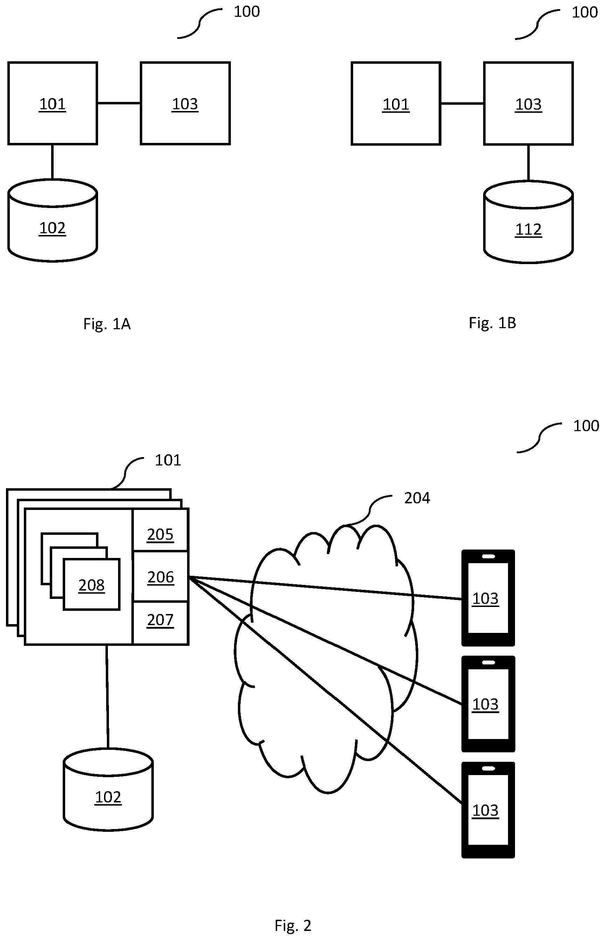

Fig. 1A shows an example of general components of a face recognition system 100. The face recognition system 100 comprises a first computing system 101, a database 102, and a second computing system 103. The first computing system 101 is used for training a face recognition machine learning network. The face recognition machine learning network may be used for verifying an identity document; for automatic check-in, baggage drop-off, automatic boarding gates or automatic ticket gates; for preventing voting fraud, and/or for identifying criminal suspects. The face recognition machine learning network may be implemented as one of a gradient-boosted tree, a random forest, an artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof.

Preferably, the face recognition machine learning network is a deep learning architecture, e.g., a deep neural network. The first computing system 101 may be a dedicated high-performance computing system, which is specifically designed for the training of machine learning models such as the face recognition machine learning network. The first computing system 101 may be one server or a cluster of servers, which are located in one environment or distributed over several environments. The cluster of servers may also be part of a cloud computing system.

The first computing system 101 is connected to the database 102, in which training images are stored. The database 102 may be a relational database system, non-relational database system or a mix of those database systems. The database 102 may comprise volatile and non-volatile memory, multi-level cell flash memory, triple level cell flash memory, and/or cloud storage. It should further be appreciated that the database 102 described herein may be a combination of multiple storage resources, including but not limited to those referenced herein. The database 102 may further include different storage technologies, may be situated at different locations, or may also be part of the same infrastructure as the first computing system 101 and/or second computing system 103. The training images stored in the database 102 are at least partially generated by the methods described herein.

The first computing system 101 is also connected to the second computing system 103, which executes at least part of the inference computations of the trained face recognition machine learning network. The second computing system 102 may be a dedicated inference computing system, which is specifically designed for inference of machine learning models such as the face recognition machine learning network. The second computing system 102 may be part of the same server infrastructure as the first computing system 101, located at the same or a different location, but may also be located in a remote location and independent of the first computing system 101. The trained face recognition machine learning network, that is, the model resulting from the training of the face recognition machine learning network at the first computing system 101 may be transmitted to the second computing system 103. Alternatively, the trained face recognition machine learning network may also reside at the first computing system 101 or another separate computing system (not shown) and only some of the processes required to execute the trained face recognition machine learning network are executed at the second computing system 103.

The first computing system 101 and/or the second computing system 103 may include at least one processor, a memory and a network interface device, which communicate with each other via a bus. Optionally, the first computing system 101 and/or the second computing system 103 may further include a static memory, a disk-drive unit, and a user interface. A video display, an alpha-numeric input device and a cursor control device may be provided as examples of the user interface. The memory of the first computing system 101 and/or the second computing system 103 may be a main memory, a random-access memory (RAM) and/or any other volatile memory. The memory may store temporary data and program data to facilitate the execution of the face recognition machine learning network. The memory may also comprise one or more caches storing data recently retrieved from the database 102. The caches may be level 1 (L1), level 2 (L2), and/or level 3 (L3) caches. The memory may also store computer program data to implement the methods as described herein.

Fig. 1B shows another example of general components of a face recognition system 100. The first computing system 101 and the second computing system 102 have the same tasks as described with respect to Fig. 1A. Although not shown, the first computing system 101 may also be connected to a database, such as the database 102, in which training images are stored that are used for training of the face recognition machine learning network. In this example, it is assumed that the face recognition system 100 is already trained and is ready to be applied or is already applied for identification tasks. To ensure the reliability of the face recognition accuracy, the face recognition system 100 is tested. This is done by applying the trained face recognition machine learning network executed at the second computing system 103 on testing images stored in database 112. It is ensured that the testing images were not used for training the system.

Fig. 2 depicts another embodiment of the face recognition system 100. In this example, the first computing system 101 is a high-performance computing system. The first computing system 101 is comprised of a plurality of computers that form a compute cluster. The computers comprise each comprises at least one CPU 205, at least one memory 206, at least one GPU 207, and several other components 208, for example, interfaces to access one or more shared memories. The first computing system 101, i.e., part or all computers forming the compute cluster, have access to the training images stored in the database 102.

In this example, the second computing system 103 comprises a mobile device of a user. The mobile device may be a mobile phone, a smartphone, a laptop, a desktop computer, a tablet, or the like. As can be seen in Fig. 2, there may be a plurality of second computing systems 103, which all execute the inference computations of the trained face recognition machine learning network and which are all connected to the first computing system 101 via a network 204. The network 204 may be a wide area network, global network, the Internet or similar network, a public or a private network, and/or multiple interconnected networks as known by the skilled person.

The face recognition system of this example will then work as follows. The face recognition machine learning network will be trained by using the training images stored in the database 102. This process will usually require much computational power, which is provided by the high-performance computing system being the first computing system 101. In other embodiments, in which the first computing system is only a single server or computer or a less equipped server cluster, this training will take more time than it takes in the example of Fig. 2. After training the trained face recognition machine learning network is used for identifying the users of the mobile devices, i.e., the second computing systems 103.

For example, the trained face recognition machine learning network is used to unlock the mobile device. Therefore, the mobile device takes a picture with its internal or with an external camera. The trained face recognition machine learning network is then applied on the picture taken with a current facial image and decides whether the person on this current facial image is the same person as on a reference facial image stored in the mobile device. If the decision is positive, the mobile device will be unlocked, otherwise the access will be denied.

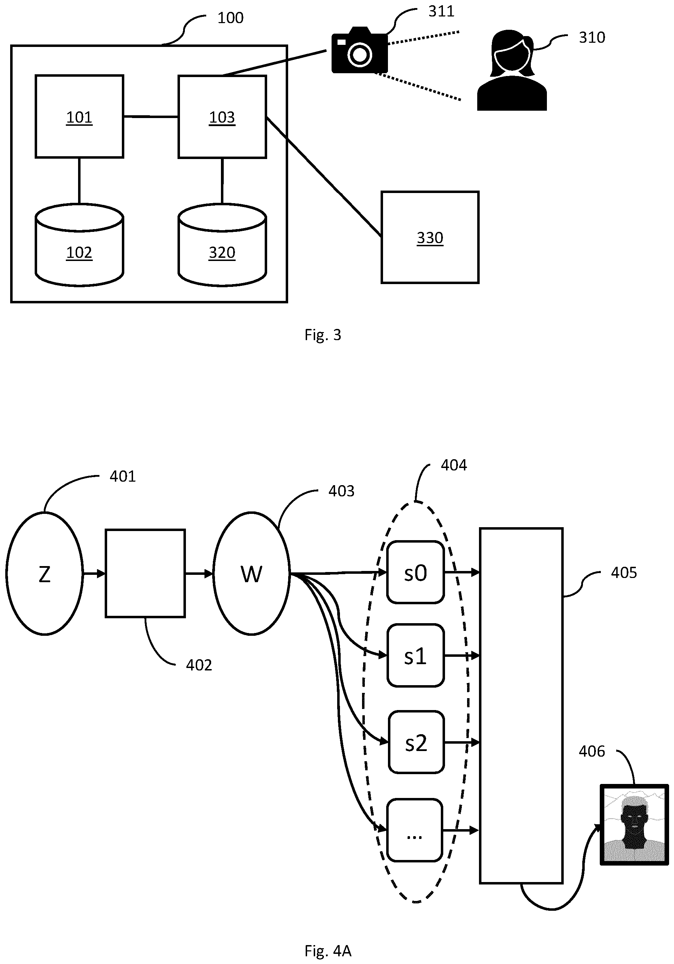

Another example for applying the face recognition system 100 is shown in Fig. 3. In this example, the fist computing system 101 is again used for training of the face recognition machine learning network with the images stored in the database 102. The inference computing system, i.e., the second computing system 103 is then used for identifying a user 310 by applying the trained face recognition machine learning network. Therefore, the second computing system 103 is connected to a camera 311 or another video/image apparatus. The camera 311 takes a picture or video of the user 310 and sends a facial image of the user 310 to the second computing system 103. The facial image may be identical to the picture or to a frame of the video taken or may be preprocessed by an additional computing system (not shown) connected to the camera 311. Additionally or alternatively, the second computing system 103 may also perform some preprocessing actions on the facial image received from the camera 311 or the additional computing system.

Then, the facial image is input in the trained face recognition machine learning network to determine whether the user 310 is an authorized user for which a reference image is stored in a database 320. The database 320 may store a plurality of images of authorized users. If the face recognition machine learning network identifies the user 310, i.e., determines that the user 320 is one of the authorized users for which one or more images are stored in the database 320, the second computing system 103 may inform an apparatus 330 about the identity and/or the outcome of the determination. In one embodiment, the apparatus 330 may be or comprise another computing system.

When the apparatus 330 is a computing system, the apparatus 330 may be informed about the outcome and/or identity of the determination of the face recognition machine learning network and may react accordingly. For example, the computing system may cause a green light to turn on if the identification was positive and a red light of the identification is negative. Alternatively or additionally, the computing system may present additional data to the identified person on a screen, may cause an alarm to sound if the identification is negative or if the identified person has special needs, is a child or is a criminal, or the like.

In another embodiment, the apparatus 330 may be a mechanical/electrical door or gate. The second computing system 103 may then cause the door or gate to open if the identification is positive. In additional embodiments, there may be a plurality of apparatuses 330 that are informed about the outcome of the determination, e.g., a gate may open and a computer system may inform service people, e.g., border police, airport staff, and the like, about the identity of the user 310.

Now turning to the generation of training and/or testing images used by the face recognition system 100. It has been shown in the past that several machine learning techniques, such as support vector machines, artificial neural networks in general, and convolutional neural networks in particular, can be applied in face recognition systems 100 and provide acceptable results, often even in real-time. However, the training of such face recognition machine learning networks is highly relevant to the reliability of the face recognition when applied. Unbalanced or biased training sets of facial images, which may comprise, for example, only men, only one ethnicity, underrepresented children, no curly hair, only few types of glasses, or being otherwise unbalanced, introduce biases to the face recognition and lead to a large number of false-negatives and/or false-positives. Moreover, if an existing and already applied or to be applied face recognition system 100 is evaluated for its reliability, an unbalanced testing set of facial images will not accurately evaluate the quality of the face recognition system 100.

Balanced and/or comprehensive datasets of facial images are difficult to obtain. Although there are plenty of facial images collected in the world wide web, these images are either of a bad quality, do not provide enough variations for some ethnicities, poses, or age groups, are not allowed to be used as they are be covered by restrictive licenses, and the like. Furthermore, collecting and using images of faces that are captured by cameras on public spaces is often restricted by privacy law. Hence, there is a need to obtain balanced and comprehensive sets of training and/or testing images.

Generating fake images for training and/or testing seems a promising approach. The latest developments use generative adversarial networks for generating fake facial images. The general idea of a generative adversarial network (GAN) is for example described in: Goodfellow, Ian; Pouget-Abadie, Jean; Mirza, Mehdi; Xu, Bing; Warde-Farley, David; Ozair, Sherjil; Courville, Aaron; Bengio, Yoshua (2014). Generative Adversarial Nets. Proceedings of the International Conference on Neural Information Processing Systems (NIPS 2014). pp. 2672-2680.

The input of a GAN is usually a random noise vector from which a random image is generated. The random noise vector is converted to a vector in the latent space of the GAN. The random noise space and the latent space of the GAN usually have no meaning. However, the latent space has a structure that can be explored, such as by interpolating between points and performing vector arithmetic between points in latent space which have meaningful and targeted effects on the generated images. However, controlling the images that are generated by a GAN is difficult if not impossible by using the GAN alone. But this is necessary if training and/or testing images for face recognition systems 100 should be balanced, cover all ethnicities, poses, and the like, in order to ensure reliable results.

There are different approaches for controlling the images generated by a GAN. Since the latent space of a GAN has no semantic meaning, i.e., parameters of the space do not relate to identifiable and nameable attributes of the facial images, modifying parameters of the latent space without further knowledge and processes will not result in controllable images that enhance the reliability of face recognition systems 100. If nevertheless controlling of the latent space is considered, the currently known methods cannot work on arbitrary pre-trained GANs but require the training of a new GAN to learn the meaning of the latent space, such as described in: Deng, Yu, et al. Disentangled and controllable face image generation via 3d imitative-contrastive learning. In: Proceedings of the IEEE/CVF Conference on Computer Vision and Pattern Recognition. 2020. S. 5154-5163.

Additionally, the greater the number of attributes that are modified of a facial image, such as identity (who is this), expression, texture, pose, illumination, camera position, hair, age, ethnicity, skin color, glasses, and the like, the more 3D parameters shall be taken into account, the more complex the latent space gets. The solution is usually to apply multiple GANs, each for the modification of some parameters. For example, one GAN may be used to generate new face identification parameters, one GAN to generate pose variations, one GAN to generate light variations and so on. But this procedure is not efficient and needs many extra datasets for training and extra time for generating the facial images.

The solution hereto could be the following framework: Designing a controllable semantic parameter space and training a mapping machine learning network from this semantic parameter space to the latent space of GAN. Through the mapping network, the GAN can be controlled to generate many variations for the same face identity, e.g. for the same face, but to turn the head to the left/up for 25 degrees, change the light source to 3 o'clock direction, change the facial expression, translation, and such. However, the latent space of GANs is always entangled, i.e., a modification of one attribute requires several changes of the parameter values in the corresponding vector in the latent space. This always introduces additional errors when generating variations of one face identity.

Currently, researchers have created some GANs that do not only comprise a random noise latent space, which is the original input of a GAN and usually called "Z", and an intermediate latent space, which is called "W", but also a style space. These GANs can be characterized to be style-based GANs as, for example, described in: Karras, Tero; Laine, Samuli; Aila, Timo. A style-based generator architecture for generative adversarial networks. In: Proceedings of the IEEE/CVF conference on computer vision and pattern recognition. 2019. S. 4401-4410. and Wu, Zongze; Lischinski, Dani; Shechtman, Eli. Stylespace analysis: Disentangled controls for stylegan image generation. In: Proceedings of the IEEE/CVF Conference on Computer Vision and Pattern Recognition. 2021. S. 12863-12872.

Fig. 4A gives a coarse overview on a style-based GAN. An input vector z of the GAN belonging to random noise space Z 401 is mapped through a non-linear mapping network 402 to a vector w belonging to the latent space W 403. The mapping may be implemented by using an 8-layer multi-layer perceptron. Learned affine transformations then specialize a vector w of the latent space W to a vector s in the style space S 404 that control adaptive instance normalization (AdaIn) operations after each convolution layer of the style-based GAN 405, which then generates the final output image 406. The vector s of the style space S is composed of a plurality style layers s0, s1, s2.... Each style layer may be used in an AdaIn operation and is, thus, associated with the respective convolution layer of the style-based GAN. Of course, other implementations of style-based GANs may use other normalization or mapping operations and other kind of layers in the GANs to which the respective style layers s0, s1, ... are associated. They may also serve as direct input to layers of the GANs.

Each style layer has a plurality of channels, which correspond to the dimension of the style layer vector. For example, if style layer 0, i.e., s0, consists of 512 channels, this means the vector has the dimension of 512, i.e., comprises 512 parameters. Each of these parameters controls a specific attribute, for example, one may control the red component, one the blue component, one the green component of the hair color. In another example, one channel may control a color component of the eyes, one the size of the eyes, one the position of the right eye, one the position of the left eye and so on.

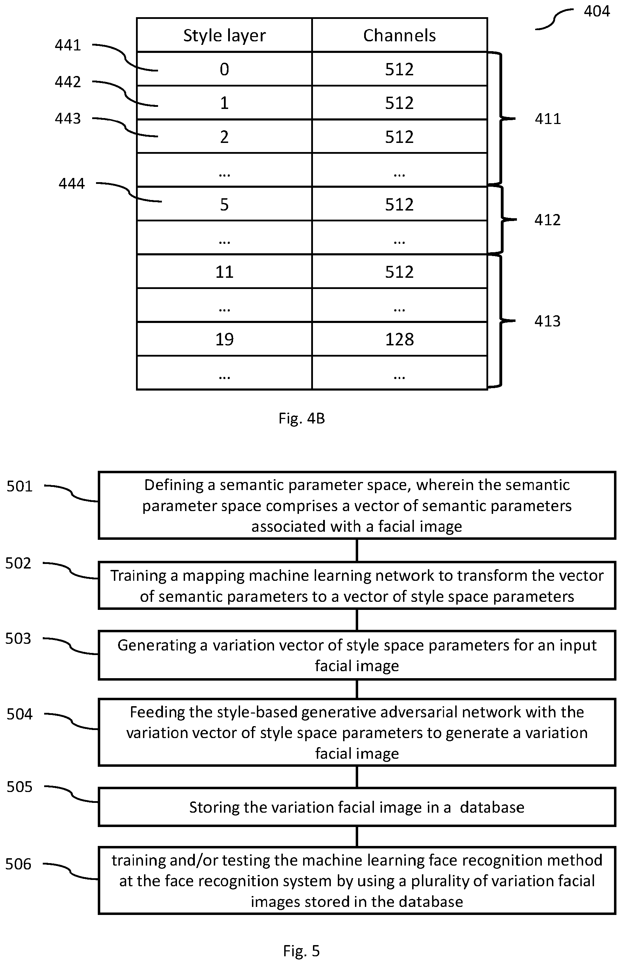

Fig. 4B shows a table of the style space S 404, that is, how a vector s with its style layers 0, 1, ... is constructed. A style space vector s is comprised of a plurality of style layers as depicted in the left column of the table of Fig. 4B. These correspond to those in Fig. 4A. For example, s0 is style layer "0" 441, s1 is style layer "1" 442, s2 is style layer "2" 443 and so on. The first style layers may all have 512 channels, the later style layers may have less channels, i.e., a lower dimensionality, which is depicted in the right column of the table of 4B.

For most GANs with progressive image resolution increase, some layers of the style space can be grouped. For example, high-level aspects such as pose, general hair style, face shape, and eyeglasses may be defined in the first group 411 comprising the first layers. Smaller scale facial features, hair style, eyes open/closed and similar expressions may be defined in the second group 412 of layers that starts with style layer "5" 444. Color scheme and microstructure of the faces may then be defined in the last group 413 of layers. Other numbers of groups, style layers and channels are possible, too, and depend on the style-based GAN.

Hence, style space S 404 is significantly better disentangled than latent space W 403. For example, W may only have 512 dimensions and may be entangled, that is, no direct control of the final image is possible. Once a vector in the latent space W 403 is modified, styles of (nearly) all style layers of the GAN are modified too, which lacks flexibility and controllability and introduces undesired errors in the final images. For example, if only the pose should be modified, it may happen that the resulting image differs in the face identity, i.e., that the person shown is no longer the same person.

Thus, using the style space S 404 allows a more direct control on styles. However, the style space S 404 is not semantic and the single parameters, i.e., the values of the channels have no meaning, and a plurality of channels need to be modified for changing attributes such pose or glasses. Hence, controlling direct in the style space is insufficient for generating training and/or testing facial images for face recognition systems 100.

In view of the style space, this application presents the following framework: Designing a controllable semantic parameter space and training a mapping machine learning network from this semantic parameter space to the style space of a style-based GAN. This framework enables a generation of training and/or testing images that are comprehensive, i.e., cover all required population groups, poses, lighting conditions, accessories, and the like.

Fig. 5 depicts a flowchart of the basic method for the above stated framework. In box 501, a semantic parameter space is defined. A vector of semantic parameters located in the semantic parameter space is associated with a facial image, that is, it describes exactly how the face looks like. Therefore, the semantic parameters comprise different kind of parameters for different attributes of the face, such as face model parameters, situation parameters, and additional parameters. Hence, a semantic parameter is associated with an attribute of the facial image.

In box 502, a mapping machine learning network is trained to transform an input vector of semantic parameters to an output vector of style space parameters of a style-based generative adversarial network. In a preferred embodiment, the dimension of the semantic parameter space is smaller than the dimension of the style space. However, in other embodiments, the dimensions may be identical with each other or the dimension of the semantic parameter space may even be greater than the dimension of the style space. The output vector of style space parameters may be a vector s of the style space S 404 as explained with respect to Fig. 4A and Fig. 4B.

The vector of style space parameters is structured in plurality of style layers, for example, like the style layers described with respect to Fig. 4A and Fig. 4B, with each style layer having a plurality of channels, i.e., parameter values. A channel of the vector of style space parameters controls an attribute of the facial image. Attributes are all characteristics of a facial image defining what the person looks like, including hair, pose, illumination and much more. Controlling an attribute does not necessarily mean that all features of the attribute are controlled by one channel. For example, two or more channels may control the eye color, other two or more channels may define the pose, and so on. As also explained above, each style layer is associated with a layer of the style-based GAN. The style-based GAN may also have additional layers that are not affected by the style layers.

The mapping machine learning network may be a neural network with non-linearities, mean squared error loss function, and Adam optimizer. Alternatively, the mapping machine learning network may be multi-layer perceptron, a convolutional neural network, a support vector machine or any other suitable machine learning network. The mapping machine learning network may be trained to reduce an error function between a known vector of style space parameters that correspond to the input vector of semantic parameters and the output vector of semantic parameters.

In box 503, after the training of the mapping machine learning network, a variation vector of style space parameters is generated for an input facial image by applying the trained mapping machine learning network. The input facial image may result from a facial picture take from real person or may randomly or controlled generated by a GAN or another face generating algorithm. The variation vector of style space parameters may be a vector that keeps several attributes of the facial image the same and just varies some of them. For example, the face identity may remain the same, i.e., the person may look the same, but the head may be rotated. Additionally or alternatively, the person may wear glasses, have another hair style, may have a darker tan, and/or other changes attributes or characteristics. How to generate the variation vector, i.e., which variations are required to generate a reliable training set of images for the face recognition system 100 may vary and be based on the applied face recognition machine learning network, or on the application scenarios in which the face recognition system is to be applied.

In box 504, the style-based GAN is fed with the variation vector of style space parameters to generate a variation facial image for the input facial image. Hence, each layer of the GAN that is associated with one style layer receives the respective style layer of the variation vector of style space parameters as input, e.g., via a normalization such as Adaln. This process may be performed once or more than once. Usually, a plurality of variation facial images for the input facial image will be generated, each having a different variation. In a preferred embodiment, the style-based GAN is pretrained independently from the mapping machine learning network, i.e., the mapping machine learning network can be applied to any trained style-based GAN.

In box 505, the variation facial image is stored in a database, such as the database 102 or 112. These databases will then store a plurality of variation facial images along with their input facial images. The images that show the same person may be tagged or additional information may be stored otherwise. This information/tag may be used for the training or testing of one or more face recognition machine learning networks. This is also depicted in box 506. The stored variation images are then used for training and/or testing one or more face recognition machine learning networks comprised by face recognition systems 100.

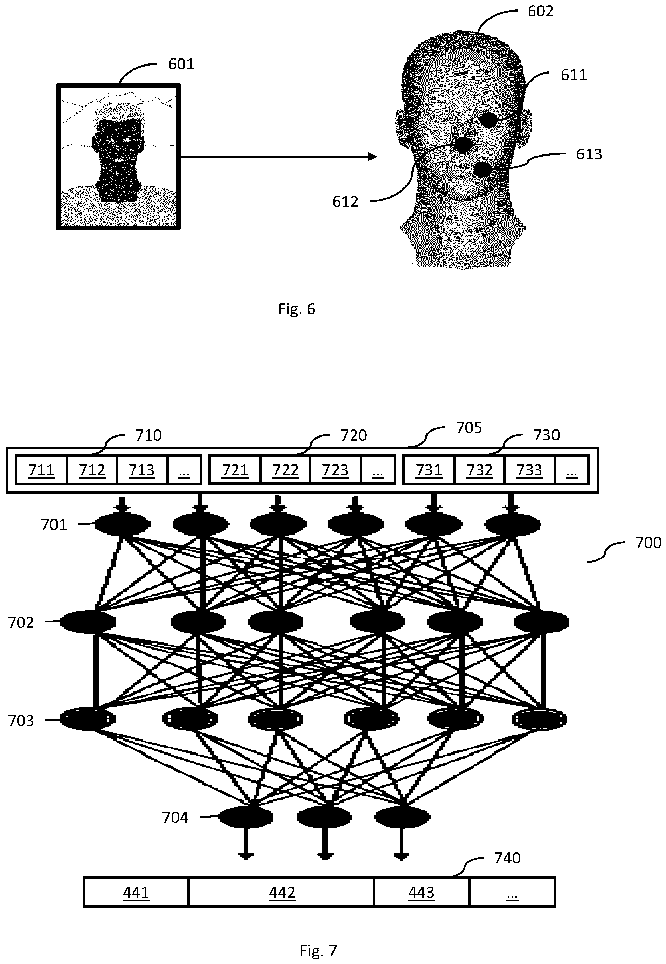

Face recognition generally can be improved if the images comprise 3D information. However, facial images generated by GANs are only 2D images and do not comprise and 3D information. As 3D information is advantageous for generating different variations, e.g., for realistically adapting the pose or the camera angle, for varying the hair and accessories, etc., the semantic parameters of the semantic parameter space may relate to a 3D representation of the 2D image. For example, and as shown in Fig. 6, the face depicted in a 2D image 601 may be transferred to a 3D face model 602, e.g., the face model as described in: Paysan, Pascal, et al. A 3D face model for pose and illumination invariant face recognition. In: 2009 sixth IEEE international conference on advanced video and signal-based surveillance. IEEE, 2009. S. 296-301.

The 3D face model 602 then defines the attributes of the faces in the 3D world, e.g., with 3D coordinates. For example, the center of the left eye 611, tip of nose 612, and the left corner of the mouth 613 may each correspond to a 3D vector (x,y,z) corresponding to a point in the 3D world. Additionally or alternatively, 3D distances between the points may be retrieved. All or part of the 3D information of the 3D face model 602 is then used as semantic parameters in the semantic parameter space of the framework as described herein.

For example, the face model parameters among the semantic parameters may comprise identification parameters, face expression parameters, and/or texture parameters. These parameters may all be 3D parameters but also relate to 2D parameters if 3D is not required. The identification parameters define the face identity, i.e., the identity of the person. This means, if these parameters are identical for two images, the same person is depicted on the two images. The face expression parameters relate to different expressions of the face, such as smiling, crying, looking angry or in pain, or neutral. For example, one parameter may relate to the degree of smiling and may also affect the number of forehead wrinkles and the like. The texture parameters relate to different color values at different locations of the face.

The situation parameters among the semantic parameters, for example, may comprise pose parameters, illumination parameters, and/or camera parameters. Thereby, pose parameters relate to the pose of the face to the camera, e.g., a rotation angle with respect to the camera. The rotation angle may be in horizontal and/or in vertical direction and may be defined by several parameters. The illumination parameters may define illumination situations, such as the angle from which the light comes, the intensity, and much more. The camera parameters may define the distance of the face to the camera and/or distortion translations if any.

Finally, the additional parameters may comprise hair parameters, age parameters, ethnicity parameters, skin color parameters, and/or glasses parameters. Hair parameters relate to hair style, hair color, and such. Age parameters may define coarse age ranges or even define a particular age. Ethnicity parameters may relate to specifics that are particularly relevant for some ethnicity, such as face tattoos, and the like. Skin color parameters may define the skin color of the face. Glasses parameters relate to the type of glass the person on the image is wearing and may define color, style and much more.

Of course, the proposed semantic parameter space may define even more parameters that allow an even finer control of the generated images. In an alternative embodiment, the semantic parameter space comprises fewer parameters, e.g., it may not define any poses, ethnicities, eye color parameters, or the like.

Fig. 7 depicts the mapping machine learning network 700 with its input vector 705 and output vector 740. The mapping machine learning network 700 may be implemented as one of a gradient-boosted tree, a random forest, and artificial neural network, a recurrent neural network, a convolutional neural network, an autoencoder, a deep learning architecture, a support vector machine, a data-driven trainable regression model, a k-nearest-neighbor classifier, a physical model and/or a decision tree or a combination thereof. Preferably, the mapping machine learning network 700 may be a neural network with non-linearities, mean squared error loss function, and Adam optimizer.

The mapping machine learning network 700 may be comprised of several layers. In the embodiment of Fig. 7, the mapping machine learning network 700 comprises 4 layers, the layers 701, 702, 703, and 704, which may be fully connected layers. Other implementations with greater or fewer layers, which may also only be sparsely connected, or all differently connected, are possible. In the example, there is one input layer 701, two hidden layers 702 and 703, and one output layer 704. The mapping machine learning network 700 takes the vector of semantic parameters 705 as input, which is in this example composed of three vectors, a face model parameter vector 710, a situation parameter vector 720, and an additional parameter vector 730.

The face model parameter vector 710 comprises several vectors, e.g., a vector for identification parameters 711, for face expression parameters 712, and for texture parameters 713. The face model parameter vector 710 may also comprise additional vectors that comprise semantic values for other face model parameters.

The situation parameter vector 720 also comprises several vectors, e.g., a vector for pose parameters 721, for illumination parameters 722, and for camera parameters 723. The situation parameter vector 710 may also comprise additional vectors that comprise semantic values for other situation parameters.

The additional parameter vector 730 also comprises several vectors, e.g., a vector for hair parameters 731, for age parameters 732, and for glasses parameters 733. The additional parameter vector 730 may also comprise more vectors, e.g., for different accessories or skin color, that comprise semantic values for other possible parameters. The output vector is a vector of style space parameters 740 that is structed in style layers, e.g., comprising style layers 441, 442, 443, as well as optionally other style layers as described above with respect to Fig. 4A and Fig. 4B.

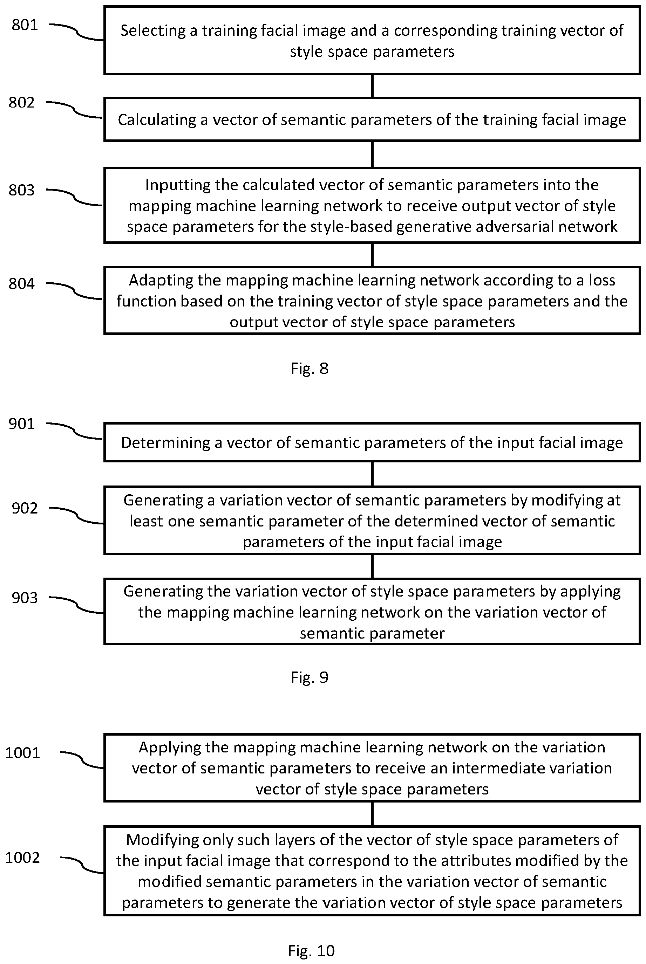

Fig. 8 is an example how the mapping machine learning network may be trained. In box 801, a training facial image and a corresponding training vector of style space parameters is selected. Usually, the training facial image will be an image previously generated by the style-based GAN, e.g., the style-base GAN 405, for which the mapping machine learning network, such as the mapping machine learning network 700, should be trained. Then, the training vector of style space parameters is known and may be stored along with the generated image. In an alternative embodiment, if the training facial image is a real image, the vector of style space parameters is calculated or estimated by inversion techniques of the respective style-based GAN.

In box 802, a vector of semantic parameters of the training facial image is calculated. Therefore, several face, situation, and accessories models are created that reflect the image. For example, there may be one model that describes the face identity, expression, and texture of the person on the image, e.g., in 2D or 3D as described with respect to Fig. 6. Based on this model, the face model parameters can be defined. Alternatively, there may be several models used for calculating the face model parameters from the training facial image.

The situation model(s) used for calculating the situation parameters will usually be different from that of the face model. A model that can be applied to define lighting parameters, e.g., for the direction and intensity of the light, can be found in: Ramamoorthi, Ravi; Hanrahan, Pat. An efficient representation for irradiance environment maps. In: Proceedings of the 28th annual conference on Computer graphics and interactive techniques. 2001. S. 497-500. Camera parameters, such as distance of the face to the camera or pose parameters may be defined by the angles and/or size of the face in the training facial image.

Finally, there may be a plurality of accessories model(s). For example, hair style and color can be defined as described in: Zhang, Meng; Zheng, Youyi. Hair-gans: Recovering 3d hair structure from a single image. arXiv preprint arXiv:1811.06229, 2018. Similar models as for the hair style may be used for facial hair. Additionally or alternatively, an age model may define a life stage, e.g., child, teenager, young adult, adult, elderly person. Accessories models may cover eyeglasses, earrings, other piercings, hats, necklaces, and such. In some embodiments, there may one model that reflects face model parameter, situation parameters and/or additional parameters.

The parameters calculated from these models that reflect the training facial image, i.e., the face models, situations models, and accessories models, may be based on machine learning classifiers' outputs on the different attributes. In one embodiment, the classifier may be the ResNet50 classifier as described in: He, Kaiming, et al. Deep residual learning for image recognition. In: Proceedings of the IEEE conference on computer vision and pattern recognition. 2016. S. 770-778.

In box 803, the now calculated vector of semantic parameters, corresponding to the vector of semantic parameters 705, is input into the mapping machine learning network to receive an output vector of style space parameters, corresponding the vector of style space parameters 740, for the style-based GAN, corresponding to the style-based GAN 405.

In box 804, the mapping machine learning network is adapted according to a loss function based on the training vector of style space parameters and the output vector of style space parameters. For example, the loss function may be Mean Squared Error Loss function, a Mean Squared Logarithmic Error Loss function, or a Mean Absolute Error Loss function.

The processes shown in Fig. 8 are repeated until a stopping condition is reached, for example, if the mean error of a number of mapping processes between the training vector of style space parameters and the output vector of style space parameters is less than a predetermined threshold. Additionally or alternatively, the training may stop when a predetermined number of training images have been processed.

After having trained the mapping machine learning network, such as the mapping machine learning network 700, the mapping machine learning network is used for generating variation vectors of style space parameters. An embodiment of how this may be done is presented in Fig. 9. The process starts in box 901 with determining a vector of semantic parameters of the input facial image. The input facial image may be a facial image previously generated by the style-based GAN, e.g., the style-based GAN 405, and the corresponding vector of semantic parameters may have been stored with the generated facial image. Alternatively, the vector of style space parameters of this input image is calculated or estimated by inversion techniques of the respective style-based GAN.

In box 902, a variation vector of semantic parameters is generated by modifying at least one semantic parameter of the determined vector of semantic parameters of the input facial image. Preferably, most semantic parameter values of the determined vector of semantic parameters of the input facial image will be identical in the variation vector of semantic parameters but only some of them are changed. For example, only the pose parameters among the situation parameters are changed in order to keep everything, in particular, the face identity of the image the same, and only turn the head around in the image that will be generated by the style-based GAN.

In an embodiment, the dimension of the vector of semantic parameters be 286, i.e., 286 parameters values are included in the vector. In this example, the number of face identification parameter values may be 80, i.e., the face identification subvector may have 80 entries (80-dimensional vector). Additionally, the face expression subvector may have 64 entries and the texture subvector may have 80 entries. This example may further comprise a 27-dimensional subvector of illumination parameters and two 3-dimensional subvectors of pose and camera parameters. Furthermore, there may be 29 additional parameters, e.g., a hair style subvector may have 10 entries, a face hair subvector may have 5 entries, a further accessories (e.g., glasses, earrings etc.) subvector may be a four-dimensional vector, und a more attributes (e.g., age, ethnicity etc.) subvector may be a 10-dimensional subvector. In this example, if the hair style should be changed, only the 10-dimensional hair style subvector has to be amended. All the other values will remain the same.

The resulting variation vector of semantic parameters is then used for generating the variation vector of style space parameters by applying the mapping machine learning network, such as the mapping machine learning network 700, which is depicted in box 903. This variation vector of semantic parameters is used as input to the mapping machine learning network, which will create a variation vector of style space parameters as output, for example, as shown in Fig. 7.

In order to further improve the generation of the variation vector of style space parameters in terms of controllability, error reduction in the generated variation image, and processing times, the process shown in Fig. 10 can be applied when generating the variation vector of style space parameters by applying the mapping machine learning network on the variation vector of semantic parameters, i.e., box 903 of Fig. 9. At first, shown in box 1001, the mapping machine learning network is applied on the variation vector of semantic parameters to receive an intermediate variation vector of style space parameters. The intermediate variation vector of style space parameters may not have amended entries that change the desired attributes, i.e., change the hair style, but also other entries may be amended that change other attributes of the facial image. These further modifications are due to internal errors of the mapping machine learning network, which cannot be avoided totally, and lead to undesired modifications of the images.

With the knowledge of the style space structure, i.e., the different layers and which layers control which attributes, only those style space parameters in the vector of style space parameters of the input facial image may be modified according to the intermediate variation vector of style space parameters that have an effect on the desired variation. This is shown in box 1002. In other words, such layers of the variation vector of style space parameters are modified that correspond to the attributes modified by the modified semantic parameters in the variation vector of semantic parameters, which was used to generate the variation vector of style space parameters.

This enhanced modification with only modifying some layers, significantly reduces possible errors in the generated images, i.e., the variation images show the same person in another pose, with another hair style, or such, but do not change the person's identity. Moreover, since the dimension of the style space is usually very large, e.g., consisting of 9088 parameters in total (comprised in 26 layers with 32 to 512 channels each), amending the style space parameters directly would require a lot of knowledge, e.g., which parameters exactly control which attributes, many manipulations in the style space vector, and also introduce errors in the generated image.

Furthermore, a semantic space that is smaller than the latent space or the style space allows the respective vectors of the semantic parameters used to generate the training/test set of facial images to be stored in a smaller memory area than would be required to store the latent space or even the style space. Additionally, by only modifying only some layers of the vector of style space parameters of the input facial image, results from the layers in the style-based GAN, which may be temporally stored in a cache or similar memory, may be reused when generating the variation facial image, which reduces the processing time for generating the variation facial images.

In another embodiment, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

Accordingly, the described embodiments should be understood as being provided by way of example, for the purpose of teaching the general features and principles, but should not be understood as limiting the scope, which is as defined in the appended claims.

## Claims

1. A computerized method of generating training and/or testing data for a face recognition machine learning network applied by a face recognition system comprising:
a. defining a semantic parameter space, wherein the semantic parameter space comprises a vector of semantic parameters associated with a facial image, wherein the semantic parameters comprise face model parameters, situation parameters, and additional parameters, wherein each semantic parameter is associated with an attribute of the facial image;
b. training a mapping machine learning network to transform the vector of semantic parameters to a vector of style space parameters of a style-based generative adversarial network, wherein the vector of style space parameters is structured in plurality of style layers with each style layer having a plurality of channels, wherein each channel controls an attribute of the facial image and each style layer is associated with a layer of the style-based generative adversarial network;
c. generating a variation vector of style space parameters for an input facial image by applying the trained mapping machine learning network;
d. feeding the style-based generative adversarial network with the variation vector of style space parameters to generate a variation facial image for the input facial image;
e. storing the variation facial image in a database; and
f. training and/or testing the face recognition machine learning network at the face recognition system by using a plurality of variation facial images stored in the database.

2. The method of claim 1, wherein the facial image is a 2D facial image and wherein the semantic parameters relate to a 3D representation of the 2D facial image.

3. The method of claim 1 or 2, wherein the face model parameters comprise face identification parameters, face expression parameters, and texture parameters.

4. The method of any one of claims 1 to 3, wherein the situation parameters comprise at least one of pose parameters, illumination parameters, and camera parameters.

5. The method of any one of claims 1 to 4, wherein the additional parameters comprise at least one of hair parameters, age parameters, ethnicity parameters, skin color parameters, and glasses parameters.

6. The method of any one of claims 1 to 5, wherein training a mapping machine learning network to transform the vector of semantic parameters to a vector of style space parameters of a style-based generative adversarial network comprises:
a. selecting a training facial image and a corresponding training vector of style space parameters;
b. calculating a vector of semantic parameters of the training facial image;
c. inputting the calculated vector of semantic parameters into the mapping machine learning network to receive an output vector of style space parameters for the style-based generative adversarial network;
d. adapting the mapping machine learning network according to a loss function based on the training vector of style space parameters and the output vector of style space parameters.

7. The method of any one of claims 1 to 6, wherein the mapping machine learning network is a neural network with non-linearities, mean squared error loss function, and Adam optimizer.

8. The method of any one of claims 1 to 7, wherein generating a variation vector of style space parameters by applying the trained mapping machine learning network comprises:
a. determining a vector of semantic parameters of the input facial image;
b. generating a variation vector of semantic parameters by modifying at least one semantic parameter of the determined vector of semantic parameters of the input facial image; and
c. generating the variation vector of style space parameters by applying the mapping machine learning network on the variation vector of semantic parameters.

9. The method of claim 8, wherein the input facial image is associated with an input vector of style space parameters, and wherein generating the variation vector of style space parameters by applying the mapping machine learning network on the variation vector of semantic parameters comprises:
a. applying the mapping machine learning network on the variation vector of semantic parameters to receive an intermediate variation vector of style space parameters;
b. modifying only such layers of the style space parameters of the input facial image that correspond to the attributes modified by the modified semantic parameters in the variation vector of semantic parameters to generate the variation vector of style space parameters.

10. The method of any one of claims 1 to 9, wherein the style-based generative adversarial network is pretrained independently from the mapping machine learning network.

11. The method of any one of claims 1 to 10, wherein a dimension of the semantic parameter space is smaller than a dimension of the style space.

12. A face recognition system comprising:
a. a first computing system for training of a face recognition machine learning network; and
b. a second computing system for inference computations of a face recognition machine learning network;
wherein the face recognition machine learning network is trained and/or tested with facial images stored in a database and wherein the facial images are at least partially generated by the computerized method of any one of claims 1 to 11.

13. The face recognition system of claim 12, wherein the first computing system and the second computing system are remote computing systems, wherein the first computing system is a high-performance computing system, and wherein the second computing system is comprised by a mobile device of a user.

14. The face recognition system of claims 12 or 13, wherein the face recognition machine learning network is used for verifying an identity document, automatic check-in, baggage drop-off, automatic boarding gates, automatic ticket gates, preventing voting fraud, and/or identifying criminal suspects.

15. A computer program comprising instructions which, when the program is executed by a computer, cause the computer to carry out the method of any one of claims 1 to 11.
